# EUROPÄISCHE PATENTSCHRIFT

(11) **EP 2 840 020 B1**
(45) Veröffentlichungstag und Bekanntmachung des Hinweises auf die Patenterteilung: **01.01.2020**
(21) Anmeldenummer: 13004558.6
(22) Anmeldetag: 18.09.2013
(51) Int. Cl.: F16H 25/22, B64C 13/42, F16D 11/00, F16H 25/20

(54) **REVERSIBLE ENTKOPPLUNGSVORRICHTUNG FÜR AKTUATOREN**
Reversible decoupling device for actuators
Dispositif de découplage réversible pour actionneurs

(30) Priorität: 12.08.2013 EP 13004003; 27.08.2013 EP 13004215
(43) Veröffentlichungstag der Anmeldung: 25.02.2015
(73) Patentinhaber: Airbus Defence and Space GmbH, 85521 Ottobrunn (DE)
(72) Erfinder: Naubert, Alexander, 70565 Stuttgart (DE); Christmann, Markus, 81375 München (DE)
(74) Vertreter: LKGLOBAL Lorenz & Kopf PartG mbB Patentanwälte

(56) Entgegenhaltungen:
- EP-A1- 0 957 293
- EP-A2- 2 532 583

## Beschreibung

Die vorliegende Erfindung betrifft Luftfahrzeugtechnologie. Insbesondere betrifft die vorliegende Erfindung Aktuatortechnologie für aerodynamisch wirksame Elemente eines Luftfahrzeuges. Weiter insbesondere betrifft die vorliegende Erfindung eine reversible Entkoppelungsvorrichtung, ein Aktuatorelement, eine Aktuatoranordnung sowie ein Luftfahrzeug, insbesondere Flugzeug oder Helikopter.

Aktuatoren finden in Luftfahrzeugen Verwendung, um Elemente der Luftfahrzeuge mechanisch zu bewegen und in ihrer Position bzw. Lage zu verändern. Bei Flugzeugen sind dies beispielsweise Ruderflächen oder Elemente der Tragflächen, um das Auftriebsverhalten der Flugzeuge zu beeinflussen. Bei Helikoptern kann dies beispielsweise die unterschiedliche Rotorblattanstellung durch eine Taumelscheibe beeinflussen.

Herkömmlich werden derartige Aktuatoren als Hydraulikelemente ausgeführt, da diese Technologie seit langem beherrschbar und wenig fehleranfällig ist. Im Fehlerfall können herkömmliche HydraulikAktuatoren meist noch bewegt werden, in anderen Worten, blockieren im Fehlerfall nicht.

Durch die zunehmende Elektrifizierung von Luftfahrzeugen ist es gewünscht, hydraulische Aktuatoren, welche möglicherweise ein im gesamten Luftfahrzeug verlaufendes Hydrauliksystem benötigen, durch elektrische Aktuatoren zu ersetzen. Diese können rein elektrisch versorgt werden, wobei derartige elektrische Leitungen regelmäßig einfacher in einem Luftfahrzeug zu verlegen sind als beispielsweise Hydraulikleitungen. Eine Bewegungserzeugung eines solchen elektrischen Aktuators kann nun ebenfalls rein elektrisch, zum Beispiel mit Hilfe eines geeigneten Antriebes durch einen Elektromotor, realisiert werden oder aber es kann ein lokales Hydrauliksystem am Aktuator vorgesehen sein, insbesondere ein im Aktuatorsystem angeordnetes Hydrauliksystem, welches gleichfalls nur extern mit elektrischer Energie versorgt werden muss. Ein solcher Aktuator ist in EP 2 532 583 A2 beschrieben.

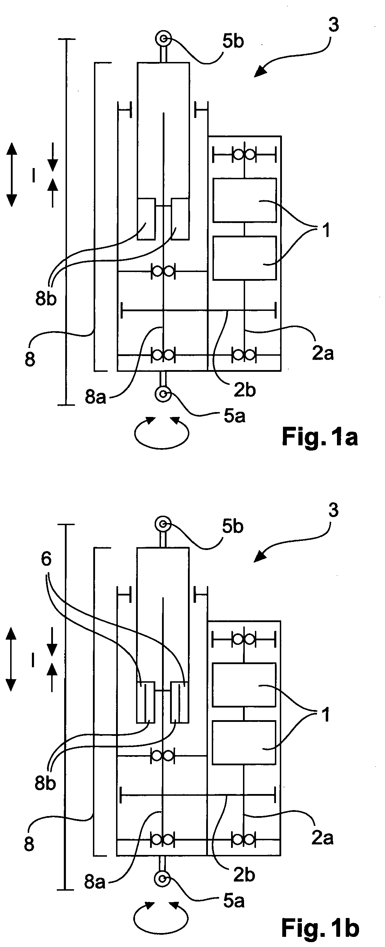

Figur 1a zeigt eine schematische Darstellung eines elektromechanischen Aktuators. Exemplarisch zwei Motorelemente 1 sind unter Verwendung einer geeigneten Anbindung, bestehend aus Motorwelle 2a und einer geeigneten Übertragung 2b an der Antriebseinheit 8 des Aktuatorelementes 3 angebunden. Die Antriebseinheit 8 ist in ihrer Länge l veränderbar, insbesondere in ihrem Abstand zwischen den beiden Anbindungspunkten 5a,b, so dass eine Längenänderung der Antriebseinheit 8 des Aktuatorelementes 3 den Abstand zwischen den Anbindungspunkten 5a,b verändert. Durch eine geeignete Einspannung zwischen Elementen ist somit beispielsweise ein Bewegen oder Verkippen einer aerodynamischen wirksamen Struktur möglich. Die Antriebseinheit 8 besteht aus einem ersten Antriebselement 8a und einem zweiten Antriebselement 8b, beispielsweise aufgebaut als ein Kugelgewindetrieb 8 mit Kugelgewindemutter 8b und Kugelgewindespindel 8a oder Planetenrollengewindetrieb mit Wälzelementen, insbesondere Kugeln bzw. Planetenrollen. Durch eine Rotation der Kugelgewindespindel 8a ist die Kugelgewindemutter 8b auf dieser verschiebbar, so dass die Rotation der Kugelgewindespindel 8a eine Längenänderung der Antriebseinheit 8 und damit des Aktuatorelementes 3 bzw. eine Veränderung des Abstandes zwischen den Anbindungspunkten 5a,b bereitstellt. Im Falle eines Defektes eines Aktuatorelementes, insbesondere bei missionskritischen aerodynamisch wirksamen Flächen, muss sichergestellt sein, dass diese trotz des Defektes zumindest weiterhin bewegt werden können. Im Falle, dass ein Aktuatorelement ausfällt, wird meist, je nach konkretem Einsatz, eine gewisse Redundanz vorgesehen. Im Falle von Leitwerken oder Rudern kann beispielsweise ein zweites Aktuatorelement kraftparallel zum ersten angeordnet beiden oder auch von beiden Aktuatorelementen zusammen wahrgenommen werden kann.

Fällt nun ein Aktuatorelement der zwei parallelen Aktuatorelemente aus, so kann das andere die Funktion zumindest aufrechterhalten. Besonders relevant in diesem Zusammenhang sind jedoch Defekte von Aktuatorelementen, die es nachfolgend nicht mehr ermöglichen, eine Längenänderung durchzuführen; beispielsweise der Bruch einer Kugel des Kugelgewindetriebs kann möglicherweise die Kugelgewindespindel und die Kugelgewindemutter gegeneinander blockieren, so dass eine Längenänderung des Aktuatorelementes nicht mehr möglich ist. In solch einem Fall kann eine Steuerung der aerodynamisch wirksamen Fläche auch nicht das parallel angeordnete Aktuatorelement durchgeführt werden. Schlimmstenfalls wäre das Flugzeug dadurch nicht mehr steuerbar und würde möglicherweise abstürzen. Um elektromechanische Aktuatorelemente weiterhin, auch im Fehlerfall, in ihrer Länge veränderbar zu halten, können Entkoppelungsvorrichtungen bzw. Entkoppelungsmechanismen in die Aktuatorelemente integriert werden, welche in einem Fehlerfall eine solche Entkoppelung ermöglichen, um weiterhin, zumindest durch eine Kraftzufuhr von außen, beispielsweise durch ein kraftparallel angeordnetes Aktuatorelement, eine geeignete Kraft aufbringen zu können, um die aerodynamisch wirksame Fläche betriebsfähig zu halten, während gleichzeitig das defekte Aktuatorelement durch die Kraft von außen in seiner Länge verändert wird und somit die Bewegung der aerodynamisch wirksamen Fläche nicht blockiert.

Figur 1b zeigt eine exemplarische Ausgestaltung eines derartigen Aktuatorelementes. Letztendlich unterscheidet sich die Ausgestaltung der Figur 1b zu der Figur 1a nur durch das Vorsehen einer Entkoppelungsvorrichtung 6. Entkoppelungsvorrichtung 6 entkoppelt dabei nicht lediglich die beiden Antriebselemente 8a,b voneinander, vielmehr wird eine Entkoppelung dergestalt vorgenommen, so dass eine Entkoppelung der Angriffspunkte 5a,b erfolgt, wobei einer der Angriffspunkte auch im entkoppelten Zustand im Wesentlichen mit beiden Antriebselementen der Antriebseinheit verbunden ist, während die Verbindung eines Antriebselementes zum zweiten Angriffspunkt 5b gelöst wird. Hierdurch kann sich die Länge eines Aktuatorelementes unabhängig davon verändern, ob ein Mechanismus der Antriebseinheit, beispielsweise das erste Antriebselement 8a zum zweiten Antriebselement 8b, blockiert ist.

Ein Aspekt der vorliegenden Erfindung kann darin gesehen werden, eine besondere Ausgestaltung einer Entkoppelungsvorrichtung für ein Aktuatorelement bereitzustellen.

Da die Entkoppelungsvorrichtung für elektromechanische Aktuatorelemente eine missionskritische Einrichtung ist, die bei Nichtfunktionieren schlimmstenfalls zum Absturz des Luftfahrzeuges führt, ist es wichtig, die Entkoppelungsvorrichtung auch zyklisch auf ihre korrekte Funktionsfähigkeit überprüfen zu können.

Demgemäß wird eine reversible Entkoppelungsvorrichtung, ein Aktuatorelement, eine Aktuatoranordnung sowie ein Luftfahrzeug, insbesondere Flugzeug oder Helikopter gemäß den unabhängigen Ansprüchen angezeigt. Bevorzugte Ausgestaltungen ergeben sich aus den abhängigen Ansprüchen.

Gemäß einer ersten Ausgestaltung der vorliegenden Erfindung wird eine reversible Entkopplungsvorrichtung für ein Aktuatorelement mit einer Antriebseinheit, aufweisend ein erstes Antriebselement und ein zweites Antriebselement, wobei das erste Antriebselement und das zweite Antriebselement funktional zusammenwirken, um eine Längenveränderung des Aktuatorelementes zu bewirken, bereitgestellt, die Entkoppelungsvorrichtung, aufweisend einen Entkoppelungsmechanismus mit einem Antriebselement, einem ersten Kraftelement, einem zweiten Kraftelement, einem ersten Formschlusselement und einem zweiten Formschlusselement, wobei das erste Kraftelement eingerichtet ist, das erste Formschlusselement in einer geschlossenen Position zu halten, wobei das Antriebselement eingerichtet ist, das erste Formschlusselement von der geschlossenen Position in eine den Formschluss gelöste Position zu versetzen, wobei das zweite Kraftelement eingerichtet ist, das zweite Formschlusselement von einer geschlossenen Position in eine den Formschluss gelösten Position zu versetzen, wobei das zweite Kraftelement durch den Formschluss des ersten Formschlusselementes blockiert wird dergestalt, dass das zweite Formschlusselement nicht in die gelöste Position versetzbar ist und wobei das zweite Kraftelement das zweite Formschlusselement in seine gelöste Position versetzen kann bei gelöstem Formschluss des ersten Formschlusselementes, wobei der Entkoppelungsmechanismus die Entkoppelungsvorrichtung funktional von einem Antriebselement des Aktuatorelementes entkoppelt, so dass die Längenveränderung des Aktuatorelementes unabhängig von der Antriebseinheit ermöglicht wird insbesondere ohne funktionale Entkoppelung von erstem Antriebselement und zweitem Antriebselement.

Gemäß einer weiteren Ausgestaltung der vorliegenden Erfindung wird ein Aktuatorelement angezeigt, aufweisend eine Antriebseinheit mit einem ersten Antriebselement und einem zweiten Antriebselement, wobei das erste Antriebselement und das zweite Antriebselement derart funktional zusammenwirken, um eine Längenveränderung des Aktuatorelementes zu bewirken und wobei das Aktuatorelement eine Entkoppelungsvorrichtung gemäß der vorliegenden Erfindung aufweist.

Gemäß einer weiteren Ausgestaltung der vorliegenden Erfindung wird eine Aktuatoranordnung bereitgestellt, aufweisend zumindest zwei erfindungsgemäße Aktuatorelemente, insbesondere vier erfindungsgemäße Aktuatorelemente, wobei die zumindest zwei erfindungsgemäßen Aktuatorelemente, insbesondere vier erfindungsgemäße Aktuatorelemente kraftparallel angeordnet sind und wobei die zumindest zwei erfindungsgemäßen Aktuatorelemente, insbesondere vier erfindungsgemäße Aktuatorelemente gemeinsam eine Positionsbeeinflussung, insbesondere in drei Freiheitsgraden, eines aerodynamisch wirksamen Elementes bereitstellen.

Gemäß einer weiteren Ausgestaltung der vorliegenden Erfindung wird ein Luftfahrzeug, insbesondere Flugzeug oder Helikopter angezeigt mit einem Aktuatorelement gemäß der vorliegenden Erfindung und/oder einer Aktuatoranordnung gemäß der vorliegenden Erfindung zum Antrieb eines aerodynamisch wirksamen Elementes.

Herkömmliche Aktuatorelemente für die Ansteuerung aerodynamisch wirksamer Elemente weisen meist entweder keine Entkoppelungsvorrichtung oder möglicherweise eine solche auf, die nur eine irreversible Entkoppelung zulässt bzw. eine Entkoppelung, welche nur mit einem erhöhten Arbeitsaufwand wieder eingekoppelt werden kann. Bei derartigen, herkömmlichen Entkoppelungsvorrichtungen ist jedoch ein regelmäßiger Test nicht möglich, da ein solcher Test, die vollzogene Entkoppelung, regelmäßig zu einem erhöhten Wartungsaufwand nach dem Test führen würde. Somit kann bei herkömmlichen Entkoppelungsvorrichtungen letztendlich nie sichergestellt sein, dass diese im Notfall einwandfrei funktionieren.

Demgegenüber wird in der vorliegenden Erfindung eine Entkoppelungsvorrichtung für ein Aktuatorelement bereitgestellt, welche nach einer Auslösung, somit einer Entkoppelung, auf einfache Weise wieder in den gekoppelten Zustand überführbar ist. Hierdurch kann eine solch reversible Entkoppelungsvorrichtung regelmäßig, beispielsweise bei einem ausführlichen Test vor dem Betrieb eines Luftfahrzeuges, auf seine korrekte Funktionsweise getestet werden.

Zum Entkoppeln des Aktuatorelementes wird ein Energiespeicher in der Entkoppelungsvorrichtung, beispielsweise ein geeignet ausgebildetes Kraftelement, zum Beispiel eine Feder, vorgesehen, welche die für die Entkoppelung nötige Energie bzw. Kraft bereitstellt. Die Entkoppelungsvorrichtung der vorliegenden Erfindung erlaubt nun nach einem durchgeführten Test bzw. einer durchgeführten Entkoppelung ein Wiederauffüllen dieses Energiespeichers durch geeignete Maßnahmen, so dass die Energie nachfolgend wieder für einen weiteren Entkoppelungsvorgang nutzbar ist.

Zur Einleitung einer Entkoppelung ist eine Auslösekraft bzw. Moment erforderlich, welche in erster Näherung proportional zur Last auf den zu entkoppelnden Aktuator ist. Eine Wiedereinkoppelung erfordert typischerweise viel kleinere Kräfte, da dies dann lastfrei erfolgen kann. Erfindungsgemäß wird nun die Auskoppelung durch einen Energiespeicher, eine Druckfeder, einen Pneumatiktank oder dergleichen unterstützt. Die Auslösekraft oder das Moment, die/das beispielsweise durch ein Antriebselement wie Elektromotor, Elektromagnet oder Aktuator basierend auf Formgedächtnislegierungen aufgebracht werden kann, muss dabei lediglich die Freisetzung der gespeicherten Energie ermöglichen, jedoch nicht die Energie selbst aufbringen. Ein Wiedereinkoppeln nach einem Test der Entkoppelungsvorrichtung mag erfindungsgemäß durch den Hauptantrieb des/der redundanten Aktuators/en erfolgen, zum Beispiel das Spannen einer Feder durch Fahren des Aktuators gegen einen Endanschlag und somit Einbringen von externer Energie in das Aktuatorelement bzw. die Entkoppelungsvorrichtung, welche über geeignete Mittel in dem Kraftelement speicherbar ist. Hierdurch ist die Entkoppelungsfunktion automatisiert testbar, wobei das Wiedereinkoppeln entweder manuell oder mittels einer geeigneten Vorrichtung automatisiert erfolgen kann.

Das Wiederaufladen des Energiespeichers, beispielsweise das Spannen der hierzu verwendeten Feder, kann durch eine gezielte Streckung bzw. Überstreckung eines Aktuatorelementes erfolgen. Beispielsweise, im Falle der Verwendung der Aktuatorelemente an einer Hubschrauber-Taumelscheibe, kann die Taumelscheibe, welche in drei Freiheitsgraden positionierbar sein muss, von mehr als drei, beispielsweise vier Aktuatorelementen angesteuert werden. Da für eine Positionierung regelmäßig nur drei Aktuatorelemente, nötig wären, ist ein derartiges System mit vier oder mehr betriebsfähigen Aktuatorelementen überbestimmt, was jedoch gleichzeitig den Ausfall eines oder mehrerer Aktuatoren ermöglicht, ohne dass die Positionierung einer solchen Taumelscheibe beeinträchtigt wird. Somit könnte bei einem Bodentest vor dem Flugbetrieb einer der Aktuatorelemente entkoppelt und dadurch auf seine Funktionsfähigkeit getestet werden. Durch geeignete Maßnahmen der Taumelscheibe kann der Aktuator nach dem Test wieder eingekoppelt werden, somit sein Energiespeicher wieder aufgeladen werden, z.B. durch geeignete Positionierung und Krafteinbringung über die verbleibenden drei funktionsfähigen Aktuatoren der Taumelscheibe.

Besonders bevorzugt ist die Ausgestaltung einer erfindungsgemäßen Entkoppelungsvorrichtung in einem zweistufigen Mechanismus. So kann die Energieabgabe des eigentlichen Kraftelementes zur Entkoppelung unter Verwendung geeigneter Mittel, zum Beispiel durch einen Formschluss, blockiert sein, ohne dass permanent von einem weiteren Element eine entsprechende Gegenkraft oder Haltekraft aufgebracht werden muss. Im Falle der Entkoppelung wiederum muss über einen geeigneten Mechanismus der Formschluss freigegeben werden, so dass das Kraftelement zur Entkoppelung seine Kraftwirkung entfalten kann. Das Halten bzw. das Freigeben des Formschlusses kann dabei mit wesentlich geringerem Energieaufwand durchgeführt werden, als beispielsweise für das permanente Halten des zur Entkoppelung verwendeten Kraftelementes nötig wäre.

Gemäß einer bevorzugten Ausgestaltung der vorliegenden Erfindung mag das Antriebselement der Entkoppelungsvorrichtung dem ersten Kraftelement entgegenwirken. Hierdurch mag das erste Kraftelement einerseits den Formschluss des ersten Formschlusselementes sicherstellen durch Halten des ersten Formschlusselementes in eine geschlossene Position, während das Antriebselement der Kraftwirkung des ersten Kraftelementes entgegenwirkt, um den Formschluss zu lösen. Somit kann das Antriebelement so ausgestaltet sein, dass es nur eine Wirkrichtung besitzt, während die zum Wiedereinkoppeln der Entkoppelungsvorrichtung erforderliche umgekehrte Wirkrichtung durch das erste Kraftelement sichergestellt ist.

Gemäß einer weiteren bevorzugten Ausgestaltung der vorliegenden Erfindung mag das zweite Formschlusselement in geschlossener Position einen Formschluss zwischen einem Antriebselement des Aktuatorelementes und der Entkoppelungsvorrichtung bereitstellen. Hierdurch ist vorgesehen, dass die Entkoppelungsvorrichtung formschlüssig mit einem Antriebselement des Aktuatorelementes in Verbindung steht. Durch einen gelösten Formschluss wird das Antriebselement des Aktuatorelementes im Zusammenspiel mit der Antriebseinheit nicht beeinflusst. In anderen Worten löst ein gelöster Formschluss des zweiten Formschlusselements keine unmittelbare Wirkung auf die Antriebseinheit selbst aus, wodurch der Formschluss auch gelöst werden kann im Falle, dass beispielsweise das erste Antriebselement und das zweite Antriebselement des Aktuatorelementes selbst den Defekt darstellen, beispielsweise gegeneinander blockiert sind.

Gemäß einer weiteren exemplarischen Ausgestaltung der vorliegenden Erfindung mag das Antriebselement der Entkoppelungsvorrichtung ausgebildet sein als ein elektromagnetisches Antriebselement, mag das erste Kraftelement ausgebildet sein als ein Federelement, mag das zweite Kraftelement ausgebildet sein als ein Federelement, mag das erste Formschlusselement ausgebildet sein als ein oder mehrere Kugelelement(e) und/oder mag das zweite Formschlusselement ausgebildet sein als ein oder mehrere Kugelelement(e). Derartige Ausgestaltungen der jeweiligen Elemente ermöglichen einen konstruktiv einfachen Aufbau der Entkoppelungsvorrichtung.

Gemäß einer weiteren bevorzugten Ausgestaltung der vorliegenden Erfindung mag das Aktuatorelement zwei Anbindungspunkte aufweisen, deren Abstand durch die Längenänderung des Aktuatorelementes festlegbar ist, wobei eines der Antriebselemente im Wesentlichen wirkunmittelbar mit einem der Anbindungspunkte verbunden ist und wobei die Entkoppelungsvorrichtung im Wesentlichen wirkunmittelbar mit dem weiteren der Anbindungspunkte verbunden ist. Hierdurch ist sichergestellt, dass bei einem Defekt in der Antriebseinheit, beispielsweise einer Blockade von erstem Antriebselement und zweitem Antriebselement des Aktuatorelementes zueinander weiterhin eine Entkoppelung des Aktuatorelementes durchführbar ist, dergestalt, dass durch externe Kraftzufuhr eine Längenveränderung des Aktuatorelementes bewirkbar ist. Im Falle, dass beispielsweise die Entkoppelungsvorrichtung das erste Antriebselement und das zweite Antriebselement voneinander entkoppeln würde, könnte dieses seine Funktion bei einer Blockade der beiden Antriebselemente des Aktuatorelementes gegeneinander möglicherweise nicht sicherstellen.

Gemäß einer weiteren bevorzugten Ausgestaltung der vorliegenden Erfindung mag der Abstand der zwei Anbindungspunkte in gekoppeltem Zustand der Entkoppelungsvorrichtung durch das Aktuatorelement einstellbar sein, wobei der Abstand der zwei Anbindungspunkte im entkoppelten Zustand der Entkoppelungsvorrichtung durch eine Kraftbeaufschlagung der Anbindungspunkte von außen veränderbar ist. Hierdurch mag sichergestellt sein, dass im Falle eines Defektes des Aktuatorelementes dieses entkoppelt werden kann und sich danach im Wesentlichen passiv verhält, so dass kraftparallel bzw. wirkparallel angeordnete Aktuatorelemente im Wesentlichen unbeeinflusst von dem defekten, entkoppelten Aktuatorelement arbeiten können.

Gemäß einer weiteren bevorzugten Ausgestaltung der vorliegenden Erfindung mag das Aktuatorelement eine minimale bzw. maximale Länge aufweisen, die es unter Verwendung der eigenen Antriebseinheit bzw. im regulären Flugbetrieb annehmen kann, wobei das Aktuatorelement in entkoppeltem Zustand durch Kraftzufuhr von außen über die minimale Länge hinaus verkürzbar ist oder über die maximale Länge hinaus verlängerbar ist, wobei die Entkoppelungsvorrichtung eingerichtet ist, in einer durch Kraftzufuhr von außen verkürzten bzw. verlängerten Länge vom entkoppelten Zustand in den eingekoppelten Zustand überführbar zu sein, insbesondere wobei durch die Kraftzufuhr von außen das zweite Kraftelement von einem ersten, expandierten Zustand, in welchem der Formschluss des zweiten Formschlussmittels gelöst ist, in einen zweiten, komprimierten Zustand überführbar ist, in welchem zweiten, komprimierten Zustand das zweite Formschlussmittel in die geschlossene Position überführbar ist. Somit lässt sich die ursprünglich für die Entkoppelung notwendige Energie, welche im zweiten Kraftelement gespeichert war, nach einer Entkoppelung dem Aktuatorelement und insbesondere dem zweiten Kraftelement von außen wieder zuführen, so dass das zweite Kraftelement diese Energie wieder speichert.

Gemäß einer weiteren bevorzugten Ausgestaltung der vorliegenden Erfindung mag bei entkoppeltem Entkopplungsmechanismus durch die Kraftzufuhr von außen und die dadurch bewirkte Stauchung des zweiten Kraftelementes das erste Kraftelement, das zuvor zur Ermöglichung der Entkoppelung durch die Antriebseinheit gestaucht wurde, wieder streckbar sein, so dass das erste Kraftelement gestreckt wird und das erste Formschlusselement von der gelösten Position in die geschlossene Position überführt wird. Hierdurch mag sich nach Einbringen der Energie in das zweite Kraftelement der Entkoppelungsmechanismus der Entkoppelungsvorrichtung dergestalt beeinflussen lassen, so dass der Formschluss des ersten Formschlusselementes zum Halten des zweiten Kraftelementes wieder herstellbar ist. Durch den ersten Formschluss wird die Energie im zweiten Kraftelement im Wesentlichen ohne externe Energiezufuhr gehalten und steht einer weiteren Entkoppelung zur Verfügung.

Gemäß einer weiteren bevorzugten Ausgestaltung der vorliegenden Erfindung mag die Antriebseinheit ausgebildet sein als ein Kugelgewindetrieb, wobei das erste Antriebselement und das zweite Antriebselement ausgebildet sein mögen als Kugelgewindespindel und Kugelgewindemutter des Kugelgewindetriebs. Alternative Ausgestaltungen mögen unter Verwendung eines Planetenrollengewindetriebes oder Trapezgewindetriebes realisiert sein. Ein Kugelgewindetrieb mag dabei eine bevorzugte Möglichkeit darstellen, die Längenänderung eines Aktuatorelementes zu bewirken, während eine so ausgebildete Antriebseinheit ausreichend Stabilität aufweisen und eine geeignet große Kraft übertragen mag.

Gemäß einer weiteren bevorzugten Ausgestaltung der vorliegenden Erfindung mag die Entkopplungsvorrichtung im Falle eines Defektes einer Antriebseinheit eines Aktuatorelementes den Entkopplungsmechanismus dieses Aktuatorelementes auslösen, so dass das Aktuatorelement funktional entkoppelt wird, wobei die Positionsbeeinflussung, insbesondere die dreidimensionale Positionsbeeinflussung, des aerodynamisch wirksamen Elementes weiterhin von dem zweiten Aktuatorelement, insbesondere den zumindest drei, funktionsfähigen Aktuatorelementen bereitgestellt wird. Beispielsweise im Falle einer Hubschrauber-Taumelscheibe mit mehr als drei, beispielsweise vier, vorgesehenen Aktuatorelementen ist für eine Einstellung der Position in den 3 vorhandenen Freiheitsgraden der Taumelscheibenbewegung Aktuator regelmäßig nur ein System aus drei Aktuatorelementen notwendig, so dass das Vorsehen zusätzlicher Aktuatorelemente das System überbestimmt. Die zusätzlichen Aktuatorelemente mögen zwar einen bezüglich einer gesamt aufzubringenden Kraft positiven Beitrag leisten, die reine Positionierung der Taumelscheibe ist jedoch mit drei Aktuatorelementen im Wesentlichen vergleichbar darstellbar. Somit kann die Funktion eines oder sogar mehrerer defekter Aktuatorelemente von mindestens drei verbleibenden funktionierenden Aktuatorelementen im Wesentlichen vollständig übernommen und kompensiert werden. Somit können in einem Defektfall eines oder mehrere Aktuatorelemente diese entkoppelt werden, so dass sie selbst keinen Kraftbeitrag mehr auf die Taumelscheibenposition einbringen können, während die Funktionsfähigkeit des Luftfahrzeuges bzw. Helikopters somit die Positionierbarkeit der Taumelscheibe durch die verbleibenden mindestens drei funktionierenden Aktuatorelemente weiterhin sichergestellt ist.

Nachfolgend wird anhand der beigefügten Zeichnungen näher auf Ausführungsbeispiele der Erfindung eingegangen. Es zeigen:
- **Fig. 1a,b**: eine schematische Darstellung eines elektromechanischen Aktuators gemäß der vorliegenden Erfindung;
- **Fig. 2a-c**: verschiedene Zustände einer exemplarischen Ausgestaltungen einer Entkoppelungsvorrichtung gemäß der vorliegenden Erfindung;
- **Fig. 3a,b**: eine exemplarische Ausgestaltung einer Aktuatoranordnung gemäß der vorliegenden Erfindung; und
- **Fig. 4a,b**: eine exemplarische Ausgestaltungen von Aktuatorelementen bzw. eine Aktuatoranordnung gemäß der vorliegenden Erfindung.

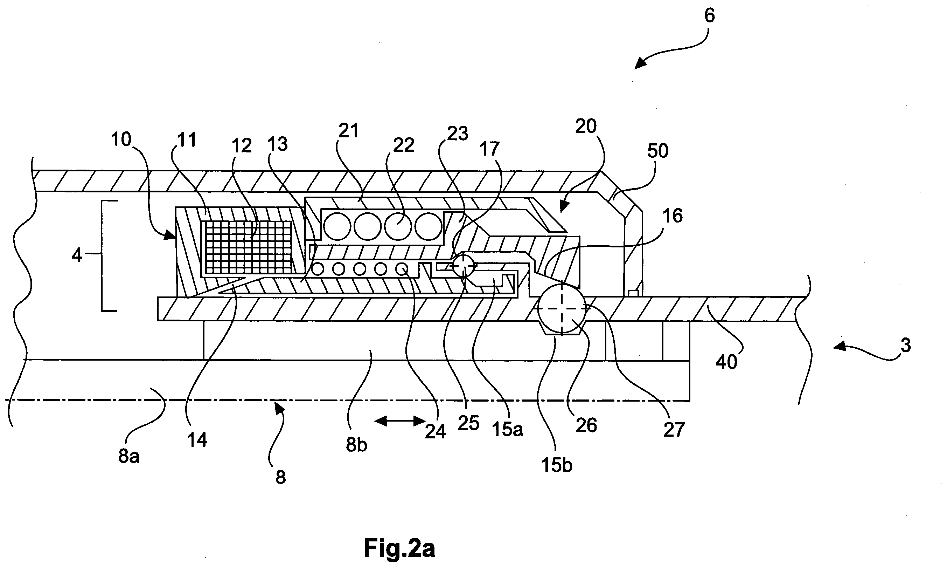

Weiter Bezug nehmend auf Figur 2a-c werden verschiedene Zustände einer exemplarischen Ausgestaltung einer Entkoppelungsvorrichtung gemäß der vorliegenden Erfindung dargestellt.

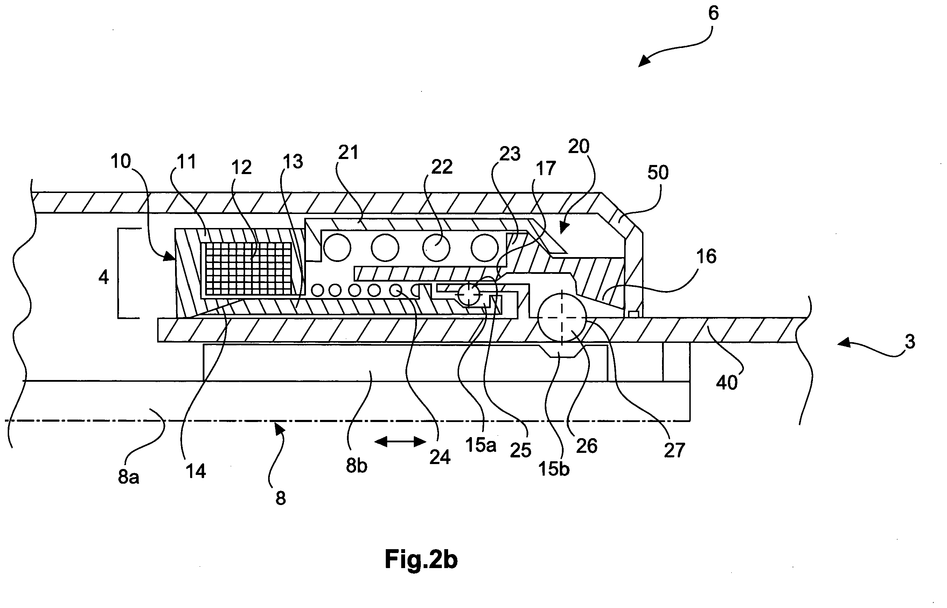

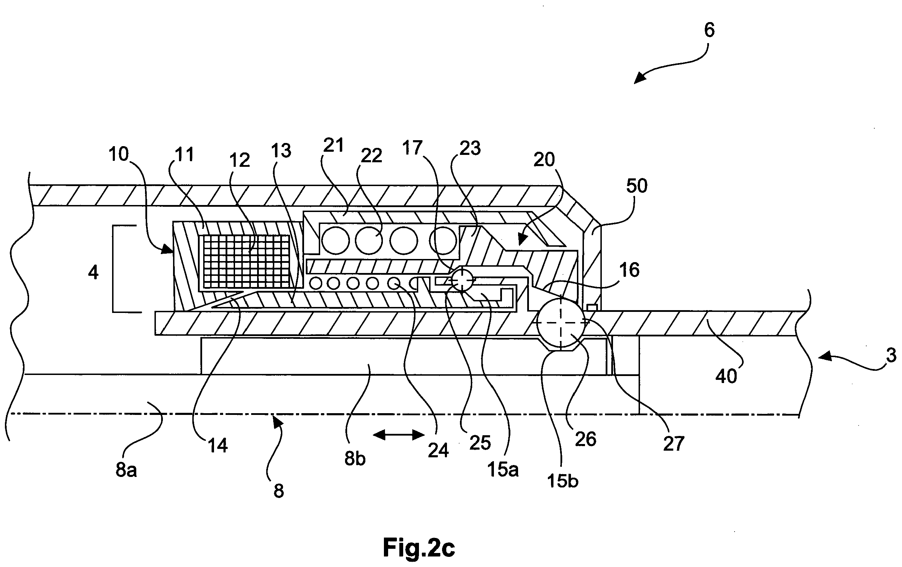

Figur 2a zeigt dabei die Entkoppelungsvorrichtung 6 in gekoppeltem Zustand, somit im Normalbetrieb, in einer exemplarisch maximal ausgefahrenen Position des Aktuatorelementes 3 für Regelbetrieb. Figur 2b zeigt die Entkoppelungsvorrichtung 6 in einem entkoppelten Zustand bei gleicher Position des Aktuatorelementes 3. Figur 2c zeigt die Entkoppelungsvorrichtung 6 in einem wieder eingekoppelten Zustand, wobei das Aktuatorelement 3 hierzu über seine maximal selbst einnehmbare Position bzw. maximale Position im Regelbetrieb hinaus durch externe Kraftzufuhr gestreckt wurde, so dass das Energiespeicherelement 22 in der Entkoppelungsvorrichtung 6 wieder die zur Entkoppelung nötige Energie gespeichert hält.

Figur 2a zeigt einen exemplarischen Aufbau eines Aktuatorelementes 3, bestehend aus einer Antriebseinheit 8, beispielsweise ein Kugelgewindetrieb, mit einem ersten Antriebselement 8a, einer Antriebsspindel bzw. Kugelgewindespindel und einem zweiten Antriebselement 8b, beispielsweise einer Spindelmutter bzw. Kugelgewindemutter. Durch Rotation des ersten Antriebselementes 8a ist das zweite Antriebselement auf diesem verschiebbar, wodurch eine Längung bzw. Verkürzung des Aktuatorelementes 3 bereitgestellt wird. Die für die effektive Länge zu berücksichtigenden Anbindungspunkte sind in Figur 2a nicht dargestellt und liegen seitlich außerhalb des Bildbereiches.

Formschlüssig an dem zweiten Antriebselement 8b angebunden ist Entkoppelungsvorrichtung 6 mit Entkoppelungsmechanismus 4. Entkoppelungsmechanismus 4 koppelt unter Verwendung des zweiten Formschlusselementes 26 den Ausgangskolben 40 formschlüssig an das zweite Antriebselement 8b an. Aufgrund des Ausgangskolbens 40, welcher an seinem nicht dargestellten Ende einen Anbindungspunkt bereitstellt, ist unter Verwendung des Entkoppelungsmechanismus 4 der Anbindungspunkt formschlüssig mit dem zweiten Antriebselement 8b verbunden. Das zweite Antriebselement 8b sollte im Weiteren vor Verdrehung geschützt an dem Entkoppelungsmechanismus 4 bzw. an dem Ausgangskolben 40 angeordnet sein, um auch im entkoppelten Zustand durch Rotation des ersten Antriebselementes 8a eine Positionsveränderung entlang der Längsachse bzw. Rotationsachse des ersten Antriebselementes 8a bereitzustellen. Im entkoppelten Zustand soll jedoch eine Verschiebung von Ausgangskolben 40 auf dem zweiten Antriebselement 8b parallel zur Rotationsachse des ersten Antriebselementes 8a möglich sein, so dass die Länge des Aktuatorelementes 3 durch eine von außen einbringbare Kraft einstellbar ist.

Die Anordnung gemäß Figur 2a ist dabei rotationssymmetrisch bezüglich der Rotationsachse des ersten Antriebselementes 8a ausgebildet. Der Entkoppelungsmechanismus 4 weist ein erstes Kraftelement 24 und ein zweites Kraftelement 22 auf. Weiterhin weist der Entkoppelungsmechanismus 4 ein erstes Formschlusselement 25, ausgebildet als kleine Kugelelemente, sowie ein zweites Formschlusselement 26, ausgebildet als große Kugelelemente, auf. Ein Antriebselement 10 ist vorgesehen, beispielsweise ein Elektromagnet, bestehend aus einem magnetisierbarem Gehäuse 11, einem Spulenelement 12 sowie einem Ankerelement 13. In einem Ruhezustand, somit in einem unbestromten Zustand des Antriebselementes 10 ist das erste Kraftelement 24 eingespannt zwischen dem magnetisierbaren Gehäuse 11 und dem Ankerelement 13, wodurch diese gegeneinander verschoben bzw. auseinandergedrückt werden, so dass sich Öffnung 14 ausbildet. Ankerelement 13 weist im Weiteren eine Vertiefung 15a auf, in welche das erste Formschlusselement 25 versetzbar ist. Hierzu muss das Antriebselement 10 bzw. der Elektromagnet jedoch bestromt werden, so dass in Figur 2a das Ankerelement 13 nach links in Richtung des magnetisierbaren Gehäuses 11 gezogen wird, wodurch sich Öffnung 14 schließt. Hierdurch wird eine zusätzliche Kraft auf das erste Kraftelement 24 aufgebracht, welches dadurch weiter komprimiert wird. Hierdurch verrutscht das Ankerelement 13 dergestalt, dass das erste Formschlusselement 25 in die Vertiefung 15a gleiten kann. Dadurch wird der Formschluss des ersten Formschlusselementes 25 mit der Stellhülse 23 gelöst, so dass die im zweiten Kraftelement 22 gespeicherte Energie die Stellhülse, in Figur 2a, nach rechts verschieben kann. Durch den Formschluss des ersten Formschlusselementes 25 wurde somit eine Blockade bzw. ein Formschluss der Stellhülse 23 bereitgestellt, wodurch das zweite Kraftelement 22 gehindert war, seine Energie abzugeben und die Stellhülse 23 nach rechts zu verschieben. Durch die Positionseinnahme von erstem Formschlusselement 25 in Vertiefung 15a wird dieser Formschluss jedoch freigegeben, so dass das zweite Kraftelement 22 die Stellhülse 23 nach rechts verschieben kann. Durch die Verschiebung der Stellhülse 23 wird das zweite Formschlusselement 26, welches in der Vertiefung 15b gehalten wurde, freigegeben, somit sein Formschluss gelöst. Bzgl. Figur 2a bedeutet dies, dass das zweite Formschlusselement 26 in Richtung Außenseite des Aktuatorelementes 3 ausweichen kann, wodurch der Formschluss von zweitem Antriebselement 8b und Ausgangskolben 40, bereitgestellt durch das zweite Formschlusselement 26, gelöst wird, so dass die beiden Elemente 8b und 40 gegeneinander verschiebbar, aber nicht verdrehbar sind. Elemente 11 und 40 sind verbunden dargestellt, so dass eine Relativbewebung der Elemente zueinander vermieden wird. Alternativ können Elemente 11 und 40 einstückig ausgebildet sein. Auch mögen Elemente 21 und 11 verbunden oder einstückig ausgeführt sein.

Figur 2b zeigt nun den entkoppelten Zustand des Entkoppelungsmechanismus 4. Das erste Formschlusselement 25 ist in Vertiefung 15a angeordnet, während das zweite Formschlusselement 26 aus der Vertiefung 15b herausgelöst wurde. Antriebselement 10 wird/wurde bestromt, so dass Öffnung 14 nun geschlossen ist. Aufgrund der Anordnung des ersten Formschlusselementes 25 in der Vertiefung 15a kann das Ankerelement 13 nicht wieder aufgrund der Kraft des ersten Kraftelementes 24 nach rechts bewegt werden, wodurch die Position des Ankerelementes 13 in der Figur 2b auch ohne weitere Bestromung des Antriebselementes 10 erhalten bleibt/bleiben würde. Somit kann ein Auslösen der Entkoppelung schon durch einen vergleichsweise kurzen Stromimpuls am Antriebselement 10 bereitgestellt werden, der zumindest eine derart lange Dauer aufweist, bis sich Stellhülse 23 durch Kraftwirkung des Kraftelementes 22 soweit nach rechts bewegt hat, das das erste Formschlusselement 25 sich nicht mehr radial nach außen bewegen kann.

Das zweite Kraftelement 22 ist im Vergleich zur Anordnung der Figur 2a in einem expandierten Zustand, es hat somit seine Energie verwendet, um die Stellhülse 23, in Figur 2b, nach rechts zu schieben, bis diese mit ihrer Schulter am Gehäuse 21 des Entkoppelungsmechanismus ansteht. Gleichzeitig steht die Stellhülse 23 auch am Gehäuse 21 an. Ein geeignet ausgebildetes Element, beispielsweise ein C-Ring 27 mit Hülse, haltert das zweite Formschlusselement 26 und verhindert somit eine freie bzw. unbestimmte Beweglichkeit des zweiten Formschlusselementes 26, in anderen Worten, hält das Formschlusselement 26 in der entkoppelten Position.

In Figur 2c zu sehen ist der Vorgang des Wiedereinkoppelns des Aktuatorelementes 3 bzw. dessen Entkoppelungsvorrichtung 4. In Figur 2c ist die maximale Betriebslänge des Aktuatorelementes 3 überschritten. Durch externe Kraftzufuhr wurde somit die Länge des Aktuatorelementes 3, somit der Abstand zwischen den Anbindungspunkten über die maximale Betriebslänge hinaus gestreckt, wodurch das zweite Formschlusselement 26 über die Schräge 16 der Stellhülse 23 radial nach innen wieder in Richtung des zweiten Antriebselementes 8b und dort insbesondere in Richtung der Vertiefung 15b gedrückt wird. Die Vertiefung 15b kann zuvor durch Rotation des ersten Antriebselementes 8a durch Kraftwirkung des Motorelementes 1 und dadurch bewirkte Translation des zweiten Antriebselementes 8b in geeignete Position gefahren werden. Hierdurch stellt sich der Formschluss zwischen dem zweiten Antriebselement 8b und der Entkoppelungsvorrichtung 6 durch das zweite Formschlusselement 26 wieder her.

Durch das Verschieben von Ausgangskolben 40 nach rechts verschiebt sich auch der damit verbundenen Entkoppelungsmechanismus nach rechts, zunächst ohne relative Bewegung der Teile des Entkoppelungsmechanismus zueinander. Dies ist dadurch sichergestellt, dass Antriebseinheit 10 (bis auf Ankerelement 13) sowie Gehäuse 21 gegenüber dem Ausgangskolben 40 translatorisch und rotatorisch festgelegt sind. Überschreitet dabei der Ausgangskolben zusammen mit dem Entkoppelungsmechanismus den Regelbetriebsbereich und tritt nach rechts in den überstreckten Bereich ein, schlägt die Stirnseite von Stellhülse 23 am Gehäuse 50 des Aktuatorelementes an. Durch das Verschieben durch den Anschlag bzw. die Überstreckung des Aktuatorelementes 3 wird mittels der Stellhülse 23 das zweite Kraftelement 22 wieder komprimiert. Somit wird dieses wieder mit Energie versorgt, welche das zweite Kraftelement 22 speichert, um einen weiteren, späteren Entkoppelungsvorgang durchführen zu können. Stellhülse 23, insbesondere die Schräge 17, befindet sich nun wieder in einer Position, die eine Bewegung von erstem Formschlusselement 25 radial nach außen erlaubt. Durch die Kraftwirkung des ersten Kraftelements 24 und weil der Formschluss mit dem ersten Formschlusselement 25 aufgehoben ist, wird Ankerelement 13 nun nach rechts bewegt, was den Spalt 14 wieder ausbildet und ein Verschieben des ersten Formschlusselementes 25 aus der Vertiefung 15a bewirkt. Durch die neue Position von Ankerelement 13 ist nun die Position von erstem Formschlusselement 25 wieder so festgelegt, dass durch Formschluss zwischen erstem Formschlusselement 25 und der Schräge 17 von Stellhülse 23 das zweite Kraftelement 22 in seiner komprimierten Form fixiert ist, auch wenn die Stirnfläche von Stellhülse 23 nicht mehr in Kontakt mit dem Gehäuse 50 des Aktuatorelementes steht. Ausgangskolben 40 zusammen mit Entkoppelungsvorrichtung 4 und zweitem Antriebselement 8b kann nun durch Kraftwirkung der Motoreinheit in Zusammenwirken mit erstem Antriebselement 8a zurück in den Regelbetriebsbereich gefahren werden und der Wiedereinkoppelungsvorgang ist abgeschlossen.

Aufgrund einer Verdrehsicherung zwischen dem Ausgangskolben 40 und dem zweiten Antriebselement 8b kann auch im entkoppelten Zustand das zweite Antriebselement 8b durch Rotation des ersten Antriebselementes 8a auf diesem in axialer Richtung verfahren werden. Insbesondere zu beachten ist, dass in Bild 2c das Aktuatorelement 3 keinen Defekt im eigentlichen Sinn aufweist, sondern eine normale Funktion der Antriebseinheit 8, wodurch die Verschiebbarkeit des zweiten Antriebselementes 8b durch Rotation des ersten Antriebselementes 8a auf diesem weiterhin gewährleistet ist. Aus diesem Grund kann das zweite Antriebselement 8b durch Rotation des ersten Antriebselementes 8a auch in eine Position gefahren werden, die eigentlich über der maximalen Funktionslänge, in anderen Worten außerhalb des Regelbetriebsbereiches des Aktuatorelementes liegt und nur eingenommen werden muss, um die Einkoppelung der Entkoppelungsvorrichtung 6, somit das Herstellen des Formschlusses des zweiten Formschlusselementes in der Vertiefung 15b zu ermöglichen. Somit stellt die Figur 2c eine Wiedereinkoppelung der Entkoppelungsvorrichtung 6 nach einem erfolgten Testentkoppeln dar. Nach der Wiedereinkoppelung stellt das Aktuatorelement 3 die im Wesentlichen gleiche Funktionalität wie vor dem Entkoppelungstest bereit.

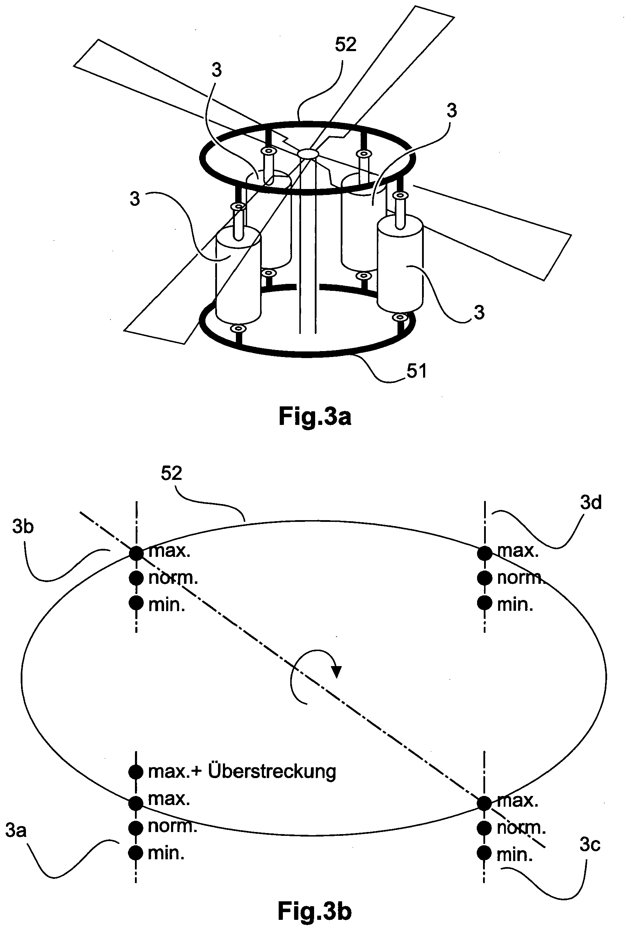

Weiter Bezug nehmend auf Figuren 3a,b wird eine exemplarische Ausgestaltung einer Aktuatoranordnung gemäß der vorliegenden Erfindung dargestellt.

Figur 3a zeigt eine schematische Anordnung von vier Aktuatorelementen 3a-d zwischen eine Luftfahrzeugstruktur 51 und einem aerodynamisch wirksamen Element 52, einer Taumelscheibe. Schematisch angedeutet ist der Rotor eines Hubschraubers mit vier Rotorblättern sowie Rotationsachse. Die Neigbarkeit der Taumelscheibe und die dadurch erfolgende Beeinflussung der Anstellung der Rotorblätter des Hubschraubers sind nicht dargestellt. Durch die vier Aktuatorelemente 3a-d ist die Taumelscheibe 52 in ihren drei Freiheitsgraden im Rahmen der konstruktiven Ausgestaltung frei einstellbar. Diese Einstellbarkeit wird prinzipiell auch durch drei der vier Aktuatorelemente 3a-d gewährleistet.

Exemplarisch wird nun ein Test eines Aktuatorelementes, beispielsweise des Aktuatorelementes 3a, durchgeführt. Dieses wird dabei gezielt entkoppelt, um festzustellen, ob die Entkoppelungsvorrichtung 6 einwandfrei funktioniert und das Aktuatorelement im Fehlerfall entkoppeln mag, so dass dieses durch äußere Kraftzufuhr durch die verbleibenden drei Aktuatorelemente in seiner Länge einstellbar ist und somit die Funktionsfähigkeit der verbleibenden drei Aktuatorelemente und damit die Positionierbarkeit der Taumelscheibe nicht beeinträchtigt. Nach dem Auskoppeln im Rahmen des Tests soll Aktuatorelement 3a wieder eingekoppelt werden. Hierzu werden, wie in Figur 3b dargestellt, alle Aktuatorelemente 3 auf ihre maximale Position gefahren. Aktuatorelement 3a wird so angesteuert, dass sein Antriebselement 8a im überstreckten Bereich zum liegen kommt, wie in Fig.2c dargestellt. Dies ist trotz der durchgeführten Entkoppelung deshalb möglich, da dieses Aktuatorelement 3a aufgrund des Testszenarios eben nicht defekt ist, wodurch dessen Antriebseinheit 8 funktioniert und eine Verschiebung vom zweiten Antriebselement 8b auf dem ersten Antriebselement 8a weiterhin ermöglicht. Nachdem nun alle Aktuatorelemente 3a-d in ihre maximale Position gefahren wurden, werden exemplarisch die Aktuatorelemente 3b und 3c derart angesteuert, dass sie ihre Position, die maximale Position, halten. Die Aktuatorelemente 3b,c bilden somit eine Rotationsachse bzw. Kippachse für Taumelscheibe 52 aus. Aktuatorelement 3d wird nun von seiner maximalen Position eingefahren, wodurch die Taumelscheibe 52 um die Rotationsachse zwischen Aktuatorelement 3b und 3c rotiert. Hierdurch erfolgt eine Hebelwirkung, und Aktuatorelement 3a wird mechanisch von außen über seine maximale Betriebslänge hinaus überstreckt. Dieses Überstrecken entspricht dem Vorgang gemäß Figur 2c. Für das Einkoppeln besitzt jeder Aktuator 3 einen zusätzlichen Hub (max. + Überstreckung), der nun derart ausgenutzt wird, dass der Aktuator 3a überstreckt und wieder eingekoppelt wird. Diese Überstreckung wird zum Zurücksetzen des Energiespeichers, dem zweiten Kraftelement 22 im Aktuatorelement 3a verwendet. Dadurch wird gemäß den bezüglich Figur 2c beschriebenen Vorgängen die Entkoppelungsvorrichtung 6 wieder eingekoppelt. Aktuatorelement 3a ist somit wieder regulär verwendbar. Nun kann sukzessive ein vergleichbarer Test für die Aktuatorelemente 3b, 3c und 3d durchgeführt werden, wodurch nach einem erfolgten Testlauf die Entkoppelungsvorrichtung 6 jedes Aktuatorelementes 3a-d getestet wurde.

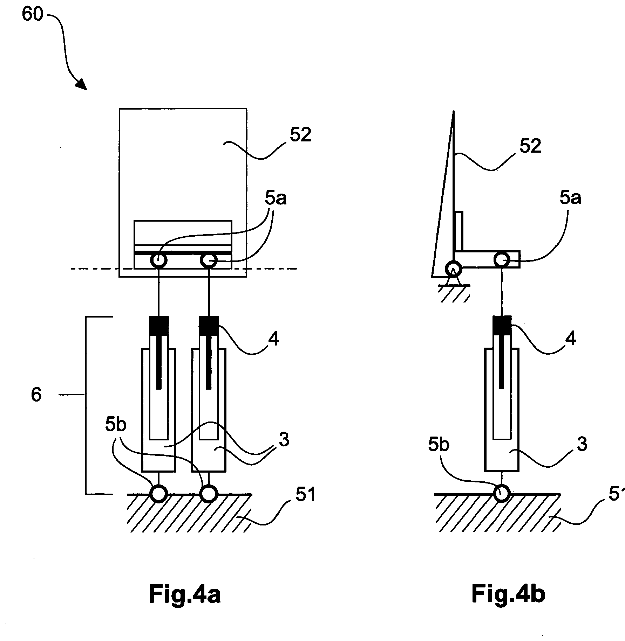

Figuren 4a,b zeigen die Verwendung einer erfindungsgemäßen Aktuatoranordnung 60 exemplarisch zur Ansteuerung einer aerodynamisch wirksamen Fläche 52 eines Flugzeuges. Beispielsweise kann es sich hierbei um eine Steuerfläche oder aber um eine den Auftrieb beeinflussende Fläche der Flügel handeln. Die Aktuatoranordnung 60 besteht aus zwei kraftparallel bzw. wirkparallel angeordneten Aktuatorelementen 3, welche einerseits an einem Fixpunkt der Flugzeugstruktur 51 angebracht sind und andererseits mit dem aerodynamisch wirksamen Element 52 in Verbindung stehen. Über einen geeigneten Hebelmechanismus ist durch eine Längung bzw. Kürzung der Aktuatoranordnung 60 eine Winkellage des aerodynamisch wirksamen Elementes 52 einstellbar. Jedes Aktuatorelement 3 weist dabei eine Antriebseinheit mit erstem Antriebselement und zweitem Antriebselement auf, welches in Figuren 4a,b jedoch nicht detailliert dargestellt ist. Jedes Aktuatorelement 3 mit seinen Antriebseinheiten ist für sich einstellbar, eine bestimmte Längenerstreckung anzunehmen, mithin einen Abstand zwischen den Anbindungspunkten 5a und 5b einzustellen. Bezogen auf Figur 4b, wenn Aktuator 3 gelängt wird, kippt die aerodynamisch wirksame Fläche 52 aufgrund des Hebels nach links, während sie bei einer Verkürzung des Aktuators 3 nach rechts kippt. Wie der Figur 4a zu entnehmen ist, sind die beiden Aktuatorelemente 3 der Aktuatoranordnung 60 parallel zwischen Flugzeugstruktur 51 und aerodynamisch wirksamem Element 52 angebunden. Somit mag jedes Aktuatorelement 3 für sich genommen eine Anwinklung der aerodynamisch wirksamen Fläche 52 erzielen oder aber beide können gemeinsam auf die aerodynamisch wirksame Fläche 52 einwirken.

Im Falle, dass nun eines der Aktuatorelemente 3 derart defekt ist, dass daraus eine Blockade seiner Antriebseinheit resultiert, wäre somit auch das zweite, wirkparallel angeordnete Aktuatorelement 3 blockiert, da das defekte Aktuatorelement dann im Wesentlichen eine starre Anbindung mit unveränderlicher Länge darstellt, so dass eine Neigung des aerodynamisch wirksamen Elementes 20a durch den jeweils anderen, noch funktionsfähigen Aktuator 3 nicht einstellbar wäre. Aus diesem Grund ist an jedem Aktuatorelemente 3 vorgesehen ein Entkoppelungsmechanismus 4. Jeder Entkoppelungsmechanismus 4 eines Aktuatorelementes 3 kann einzeln gesteuert aktiviert werden, so dass sich der dann entkoppelte Aktuator 3 im Wesentlichen mit einem geringen Kraftaufwand von außen, insbesondere eingebracht über die Anbindungspunkte 5a,b längen bzw. verkürzen lässt.

Somit kann ein defektes Aktuatorelement 3 mit entkoppeltem Entkoppelungsmechanismus 4 krafttechnisch derart deaktiviert werden, so dass die Einstellung des aerodynamisch wirksamen Elementes 52 ausschließlich durch den noch funktionsfähigen Aktuator 3 erfolgen mag. Da nur ein Aktuatorelement 3 gleichzeitig entkoppelt sein darf, mag Entkoppelungsvorrichtung 6 ausgebildet sein, nur einen einzigen Entkoppelungsvorgang anzustoßen, so dass lediglich ein Entkoppelungsmechanismus 4 der Aktuatorelemente 3 entkoppelbar ist.

### Bezugszeichenliste

- 1: Motorelement
- 2a,b: Übertragungseinheit
- 3: Aktuatorelement
- 4: Entkoppelungsmechanismus
- 5a,b: Anbindungspunkte
- 6: Entkoppelungsvorrichtung
- 8: Antriebseinheit/Kugelgewinde/Kugelgewindetrieb
- 8a: erstes Antriebselement/Antriebsspindel/Kugelgewindespindel
- 8b: zweites Antriebselement/Spindelmutter/Kugelgewindemutter
- 10: Antriebselement/Elektromagnet
- 11: magnetisierbares Gehäuse
- 12: Spulenelement
- 13: Ankerelement
- 14: Öffnung
- 15a,b: Vertiefung
- 16: Schräge
- 17: Schräge
- 20: Mechanik der Entkoppelungsvorrichtung
- 21: Gehäuse
- 22: zweites Kraftelement/Druckfeder/Energiespeicherelement
- 23: Hülsenelement/Stellhülse
- 24: erstes Kraftelement/Druckfeder
- 25: erstes Formschlusselement/kleine Kugelelemente
- 26: zweites Formschlusselement/große Kugelelemente
- 27: C-Ringe mit Hülse
- 40: Ausgangskolben
- 50: Gehäuse
- 51: Luftfahrzeug
- 52: Taumelscheibe/aerodynamisch wirksame Fläche
- 60: Aktuatoranordnung

## Patentansprüche

1. Reversible Entkopplungsvorrichtung (6) für ein Aktuatorelement (3) mit einer Antriebseinheit (8);
aufweisend ein erstes Antriebselement (8a) und ein zweites Antriebselement (8b), wobei das erste Antriebselement (8a) und das zweite Antriebselement (8b) funktional zusammenwirken um eine Längenveränderung des Aktuatorelementes (3) zu bewirken; die Entkopplungsvorrichtung (6) aufweisend einen Entkopplungsmechanismus (4) mit
einem Antriebselement (10);
einem ersten Kraftelement (24);
einem ersten Formschlusselement (25); und
wobei das erste Kraftelement (24) eingerichtet ist, das erste Formschlusselement (25) in einer geschlossenen Position zu halten;
wobei das Antriebselement (10) eingerichtet ist, das erste Formschlusselement (25) von der geschlossenen Position in eine den Formschluss gelösten Position zu versetzen;
wobei der Entkopplungsmechanismus (4) einen Ausgangskolben (40) funktional von einem Antriebselement (8a,b) des Aktuatorelementes (3) entkoppelt, so dass die Längenveränderung des Aktuatorelementes (3) unabhängig von der Antriebseinheit (8) ermöglicht wird, insbesondere ohne funktionale Entkopplung von erstem Antriebselement (8a) und zweitem Antriebselement (8b) **dadurch gekennzeichnet, dass** der Entkopplungsmechanismus (4) ferner ein zweites Kraftelement (22); und ein zweites Formschusselement (26) aufweist;
wobei das zweite Kraftelement (22) eingerichtet ist, das zweite Formschlusselement (26) von einer geschlossenen Position in eine den Formschluss gelösten Position zu versetzen;
wobei das zweite Kraftelement (22) durch den Formschluss des ersten Formschlusselementes (25) blockiert wird, dergestalt, dass das zweite Formschlusselement (26) nicht in die gelöste Position versetzbar ist; und
wobei das zweite Kraftelement (22) das zweite Formschlusselement (26) in seine gelöste Position versetzen kann, bei gelöstem Formschluss des ersten Formschlusselementes (25).

2. Entkopplungsvorrichtung gemäß Anspruch 1,
wobei das Antriebselement (10) dem ersten Kraftelement (24) entgegen wirkt.

3. Entkopplungsvorrichtung gemäß einem der vorhergehenden Ansprüche,
wobei das zweite Formschlusselement (26) in geschlossener Position einen Formschluss zwischen einem Antriebselement (8a,b) des Aktuatorelementes (3) und dem Ausgangskolben (40) bereitstellt.

4. Entkopplungsvorrichtung gemäß einem der vorhergehenden Ansprüche,
wobei das Antriebselement (10) ausgebildet ist als elektromagnetisches Antriebselement; und/oder
wobei das erste Kraftelement (24) ausgebildet ist als ein Federelement; und/oder
wobei das zweite Kraftelement (22) ausgebildet ist als ein Federelement; und/oder
wobei das erste Formschlusselement (25) ausgebildet ist als ein Kugelelement; und/oder
wobei das zweite Formschlusselement (26) ausgebildet ist als ein Kugelelement.

5. Aktuatorelement (3), aufweisend
eine Antriebseinheit (8), aufweisend ein erstes Antriebselement (8a) und ein zweites Antriebselement (8b);
wobei das erste Antriebselement (8a) und das zweite Antriebselement (8b) derart funktional zusammenwirken um eine Längenveränderung des Aktuatorelementes (3) zu bewirken; und
wobei das Aktuatorelement (3) eine Entkopplungsvorrichtung (6) gemäß einem der vorhergehenden Ansprüche aufweist.

6. Aktuatorelement gemäß Anspruch 5,
wobei das Aktuatorelement (3) zwei Anbindungspunkte (5a,b) aufweist, deren Abstand durch die Längenänderung des Aktuatorelementes (3) einstellbar ist; und
wobei eines der Antriebselemente (8a,b) im Wesentlichen wirkunmittelbar mit einem der Anbindungspunkte (5a,b) verbunden ist; und
wobei der Ausgangskolben (40) im Wesentlichen wirkunmittelbar mit dem weiteren der Anbindungspunkte (5b,a) verbunden ist.

7. Aktuatorelement gemäß Anspruch 6,
wobei der Abstand der zwei Anbindungspunkte (5a,b) im gekoppelten Zustand der Entkopplungsvorrichtung (6) durch das Aktuatorelement (3) einstellbar ist; und
wobei der Abstand der zwei Anbindungspunkte (5a,b) im entkoppelten Zustand der Entkopplungsvorrichtung (6) durch eine Kraftbeaufschlagung der Anbindungspunkte (5a,b) von außen veränderbar ist.

8. Aktuatorelement gemäß einem der Ansprüche 5 bis 7,
wobei das Aktuatorelement (3) eine minimale bzw. maximale Länge aufweist, die es unter Verwendung der eigenen Antriebseinheit (8) im regulären Betrieb einnehmen kann; und
wobei das Aktuatorelement (3) im entkoppelten Zustand durch Kraftzufuhr von außen über die minimale Länge hinaus verkürzbar ist; und/oder
wobei das Aktuatorelement (3) im entkoppelten Zustand durch Kraftzufuhr von außen über die maximale Länge hinaus verlängerbar ist; und
wobei die Entkopplungsvorrichtung (4) eingerichtet ist, in einer durch Kraftzufuhr von außen verkürzten bzw. verlängerten Länge vom entkoppelten Zustand in den eingekoppelten Zustand überführbar zu sein.

9. Aktuatorelement gemäß Anspruch 8,
wobei das zweite Kraftelement (22) durch die Kraftzufuhr von außen von einem ersten, expandierten Zustand in welchem der Formschluss des zweiten Formschlusselementes (26) gelöst ist, in einen zweiten, komprimierten Zustand überführbar ist, in welchem zweiten, komprimierten Zustand das zweite Formschlusselement (26) in die geschlossene Position überführbar ist.

10. Aktuatorelement gemäß Anspruch 1,
wobei die Antriebseinheit (8) ausgebildet ist als ein Kugelgewindetrieb; und
wobei das erste Antriebselement (8a) und das zweite Antriebselement (8b) ausgebildet sind als Antriebsspindel und Kugelgewindemutter des Kugelgewindetriebs.

11. Aktuatoranordnung (60), aufweisend
zumindest zwei Aktuatorelemente (3a,b) gemäß einem der Ansprüche 5 bis 10,
wobei die zumindest zwei Aktuatorelemente (3a,b) kraftparallel angeordnet sind; und
wobei die zumindest zwei Aktuatorelemente (3a,b) gemeinsam eine Positionsbeeinflussung eines aerodynamisch wirksamen Elementes (52) bereitstellen.

12. Aktuatoranordnung (60) gemäß Anspruch 11, wobei die Aktuatoranordnung zumindest vier Aktuatorelmeente (3a-d) aufweist, welche gemeinsam eine Positionsbeeinflussung in drei Freiheitsgraden eines aerodynamisch wirksamen Elements (52) bereitstellen.

13. Aktuatoranordnung gemäß Anspruch 11,
wobei die Entkopplungsvorrichtung (6) im Falle eines Defektes einer Antriebseinheit (8) eines Aktuatorelementes (3a) den Entkopplungsmechanismus (4) dieses Aktuatorelementes (3a) auslösen kann, so dass das Aktuatorelement (3a) funktional entkoppelt wird;
wobei die Positionsbeeinflussung des aerodynamisch wirksamen Elementes (52) weiterhin von dem zweiten Aktuatorelement (3b) bereitgestellt wird.

14. Aktuatoranordnung gemäß Anspruch 12,
wobei die Entkopplungsvorrichtung (6) im Falle eines Defektes einer Antriebseinheit (8) eines Aktuatorelementes (3a) den Entkopplungsmechanismus (4) dieses Aktuatorelementes (3a) auslösen kann, so dass das Aktuatorelement (3a) funktional entkoppelt wird;
wobei die dreidimensionale Positionsbeeinflussung des aerodynamisch wirksamen Elementes (52) weiterhin von den zumindest drei, funktionsfähigen Aktuatorelementen (3b-d) bereitgestellt wird.

15. Luftfahrzeug, insbesondere Flugzeug oder Helikopter, aufweisend ein Aktuatorelement (3) gemäß einem der Anspruche 5 bis 10 und/oder eine Aktuatoranordnung gemäß einem der Ansprüche 11 bis 14, zum Antrieb eines aerodynamisch wirksamen Elementes (52).

## Claims

1. Reversible decoupling apparatus (6) for an actuator element (3) with a drive unit (8);
having a first drive element (8a) and a second drive element (8b), the first drive element (8a) and the second drive element (8b) interacting functionally in order to bring about a length change of the actuator element (3);
the decoupling apparatus (6) having a decoupling mechanism (4) with
a drive element (10);
a first force element (24);
a first positively locking element (25); and
the first force element (24) being set up to hold the first positively locking element (25) in a closed position;
the drive element (10) being set up to move the first positively locking element (25) from the closed position into a position, in which the positively locking connection is released;
the decoupling mechanism (4) decoupling an output piston (40) functionally from a drive element (8a, b) of the actuator element (3), with the result that the length change of the actuator element (3) is made possible independently of the drive unit (8), in particular without functional decoupling of the first drive element (8a) and the second drive element (8b),
**characterized in that**,
furthermore, the decoupling mechanism (4) has a second force element (22) and a second positively locking element (26);
the second force element (22) being set up to move the second positively locking element (26) from a closed position into a position, in which the positively locking connection is released;
the second force element (22) being blocked by way of the positively locking connection of the first positively locking element (25) in such a way that the second positively locking element (26) cannot be moved into the released position; and
it being possible for the second force element (22) to move the second positively locking element (26) into its released position, in the case of a released positively locking connection of the first positively locking element (25).

2. Decoupling apparatus according to Claim 1,
the drive element (10) counteracting the first force element (24).

3. Decoupling apparatus according to either of the preceding claims,
the second positively locking element (26) providing, in a closed position, a positively locking connection between a drive element (8a, b) of the actuator element (3) and the output piston (40).

4. Decoupling apparatus according to one of the preceding claims,
the drive element (10) being configured as an electromagnetic drive element; and/or
the first force element (24) being configured as a spring element; and/or
the second force element (22) being configured as a spring element; and/or
the first positively locking element (25) being configured as a ball element; and/or
the second positively locking element (26) being configured as a ball element.

5. Actuator element (3), having
a drive unit (8), having a first drive element (8a) and a second drive element (8b);
the first drive element (8a) and the second drive element (8b) interacting functionally so as to bring about a length change of the actuator element (3); and
the actuator element (3) having a decoupling apparatus (6) according to one of the preceding claims.

6. Actuator element according to Claim 5, the actuator element (3) having two attachment points (5a, b), the spacing of which can be set by way of the length change of the actuator element (3); and
one of the drive elements (8a, b) being substantially directly operationally connected to one of the attachment points (5a, b); and
the output piston (40) being substantially directly operationally connected to the further one of the attachment points (5b, a).

7. Actuator element according to Claim 6,
it being possible for the spacing of the two attachment points (5a, b) to be set by way of the actuator element (3) in the coupled state of the decoupling apparatus (6); and
- it being possible for the spacing of the two attachment points (5a, b) to be changed by way of force loading of the attachment points (5a, b) from the outside in the decoupled state of the decoupling apparatus (6).

8. Actuator element according to one of Claims 5 to 7,
the actuator element (3) having a minimum and maximum length which it can assume with the use of the dedicated drive unit (8) in regular operation; and
it being possible for the actuator element (3) to be shortened beyond the minimum length by way of the supply of force from the outside in the decoupled state: and/or
it being possible for the actuator element (3) to be extended beyond the maximum length by way of the supply of force from the outside in the decoupled state; and
the decoupling apparatus (4) being set up to be capable of being transferred from the decoupled state into the coupled state in the case of a length which is shortened or extended by way of the supply of force from the outside.

9. Actuator element according to Claim 8,
it being possible for the second force element (22) to be transferred by way of the supply of force from the outside from a first, expanded state, in which the positively locking connection of the second positively locking element (26) is released, into a second, compressed state, in which second, compressed state the second positively locking element (26) can be transferred into the closed position.

10. Actuator element according to Claim 1,
the drive unit (8) being configured as a ball screw drive; and
the first drive element (8a) and the second drive element (8b) being configured as a drive spindle and a ball screw nut of the ball screw drive.

11. Actuator arrangement (60), having
at least two actuator elements (3a, b) according to one of Claims 5 to 10,
the at least two actuator elements (3a, b) being arranged in parallel in force terms; and
the at least two actuator elements (3a, b) together providing positional influencing of an aerodynamically active element (52).

12. Actuator arrangement (60) according to Claim 11, the actuator arrangement having at least four actuator elements (3a-d) which together provide positional influencing in three degrees of freedom of an aerodynamically active element (52).

13. Actuator arrangement according to Claim 11,
it being possible, in the case of a defect of a drive unit (8) of an actuator element (3a), for the decoupling apparatus (6) to trigger the decoupling mechanism (4) of the said actuator element (3a), with the result that the actuator element (3a) is decoupled functionally;
the positional influencing of the aerodynamically active element (52) being provided, furthermore, by the second actuator element (3b).

14. Actuator arrangement according to Claim 12,
it being possible, in the case of a defect of a drive unit (8) of an actuator element (3a), for the decoupling apparatus (6) to trigger the decoupling mechanism (4) of the said actuator element (3a), with the result that the actuator element (3a) is decoupled functionally;
the three-dimensional positional influencing of the aerodynamically active element (52) being provided, furthermore, by the at least three functional actuator elements (3b-d).

15. Aircraft, in particular aeroplane or helicopter, having an actuator element (3) according to one of Claims 5 to 10 and/or an actuator arrangement according to one of Claims 11 to 14, for driving an aerodynamically active element (52).

## Revendications

1. Dispositif de découplage réversible (6) pour un élément d'actionneur (3) comprenant une unité d'entraînement (8) ;
présentant un premier élément d'entraînement (8a) et un deuxième élément d'entraînement (8b), le premier élément d'entraînement (8a) et le deuxième élément d'entraînement (8b) coopérant de manière fonctionnelle pour provoquer une variation de longueur de l'élément d'actionneur (3) ;
le dispositif de découplage (6) présentant un mécanisme de découplage (4) comprenant un élément d'entraînement (10) ;
un premier élément de force (24) ;
un premier élément d'engagement par correspondance de formes (25) ; et
le premier élément de force (24) étant prévu pour retenir le premier élément d'engagement par correspondance de formes (25) dans une position fermée ;
l'élément d'entraînement (10) étant prévu pour déplacer le premier élément d'engagement par correspondance de formes (25) de la position fermée dans une position libérée de l'engagement par correspondance de formes ;
le mécanisme de découplage (4) découplant fonctionnellement un piston de sortie (40) d'un élément d'entraînement (8a,b) de l'élément d'actionneur (3) de telle sorte que la variation de longueur de l'élément d'actionneur (3) soit possible indépendamment de l'unité d'entraînement (8), en particulier sans découplage fonctionnel du premier élément d'entraînement (8a) et du deuxième élément entraînement (8b), **caractérisé en ce que** le mécanisme de découplage (4) présente en outre un deuxième élément de force (22) ; et un deuxième élément d'engagement par correspondance de formes (26) ;
le deuxième élément de force (22) étant prévu pour déplacer le deuxième élément d'engagement par correspondance de formes (26) d'une position fermée dans une position libérée de l'engagement par correspondance de formes ;
le deuxième élément de force (22) étant bloqué par l'engagement par correspondance de formes du premier élément d'engagement par correspondance de formes (25) de telle sorte que le deuxième élément d'engagement par correspondance de formes (26) ne puisse pas être déplacé dans la position libérée ; et
le deuxième élément de force (22) pouvant déplacer le deuxième élément d'engagement par correspondance de formes (26) dans sa position libérée, lorsque l'engagement par correspondance de formes du premier élément d'engagement par correspondance de formes (25) est libéré.

2. Dispositif de découplage selon la revendication 1, dans lequel l'élément d'entraînement (10) agit à l'encontre du premier élément de force (24).

3. Dispositif de découplage selon l'une quelconque des revendications précédentes, dans lequel le deuxième élément d'engagement par correspondance de formes (26), dans la position fermée, fournit un engagement par correspondance de formes entre un élément d'entraînement (8a,b) de l'élément d'actionneur (3) et le piston de sortie (40).

4. Dispositif de découplage selon l'une quelconque des revendications précédentes, dans lequel l'élément d'entraînement (10) est réalisé sous la forme d'un élément d'entraînement électromagnétique ; et/ou
dans lequel le premier élément de force (24) est réalisé sous la forme d'un élément de ressort ; et/ou
dans lequel le deuxième élément de force (22) est réalisé sous la forme d'un élément de ressort ; et/ou
dans lequel le premier élément d'engagement par correspondance de formes (25) est réalisé sous la forme d'un élément de bille ; et/ou dans lequel le deuxième élément d'engagement par correspondance de formes (26) est réalisé sous la forme d'un élément de bille.

5. Élément d'actionneur (3), présentant
une unité d'entraînement (8) présentant un premier élément d'entraînement (8a) et un deuxième élément d'entraînement (8b) ;
le premier élément d'entraînement (8a) et le deuxième élément d'entraînement (8b) coopérant fonctionnellement de manière à provoquer une variation de longueur de l'élément d'actionneur (3) ; et
l'élément d'actionneur (3) présentant un dispositif de découplage (6) selon l'une quelconque des revendications précédentes.

6. Élément d'actionneur selon la revendication 5,
dans lequel l'élément d'actionneur (3) présente deux points de liaison (5a,b) dont l'espacement peut être ajusté par la variation de longueur de l'élément d'actionneur (3) ; et
dans lequel l'un des éléments d'entraînement (8a,b) est connecté fonctionnellement sensiblement directement à l'un des points de liaison (5a,b) ; et
dans lequel le piston de sortie (40) est connecté fonctionnellement sensiblement directement à l'autre des points de liaison (5b,a).

7. Élément d'actionneur selon la revendication 6,
dans lequel l'espacement des deux points de liaison (5a,b) dans l'état accouplé du dispositif de découplage (6) peut être ajusté par l'élément d'actionneur (3) ; et
l'espacement des deux points de liaison (5a,b) dans l'état désaccouplé du dispositif de découplage (6) peut être modifié depuis l'extérieur par une sollicitation par force des points de liaison (5a,b).

8. Élément d'actionneur selon l'une quelconque des revendications 5 à 7,
l'élément d'actionneur (3) présentant une longueur minimale ou maximale qu'il peut adopter en utilisant l'unité d'entraînement propre (8) pendant le fonctionnement régulier ; et
l'élément d'actionneur (3), dans l'état désaccouplé, pouvant être raccourci au-delà de la longueur minimale par apport de force depuis l'extérieur ; et/ou
l'élément d'actionneur (3), dans l'état désaccouplé, pouvant être prolongé au-delà de la longueur maximale par apport de force depuis l'extérieur ; et
le dispositif de découplage (4) étant prévu pour pouvoir être transféré de l'état désaccouplé à l'état accouplé dans une longueur raccourcie ou prolongée par apport de force depuis l'extérieur.

9. Élément d'actionneur selon la revendication 8, dans lequel le deuxième élément de force (22) peut être transféré, par l'apport de force depuis l'extérieur, d'un premier état déployé dans lequel l'engagement par correspondance de formes du deuxième élément d'engagement par correspondance de formes (26) est libéré, à un deuxième état comprimé dans lequel deuxième état comprimé le deuxième élément d'engagement par correspondance de formes (26) peut être transféré dans la position fermée.

10. Élément d'actionneur selon la revendication 1, dans lequel l'unité d'entraînement (8) est réalisée sous la forme d'une vis à billes ; et dans lequel le premier élément d'entraînement (8a) et le deuxième élément d'entraînement (8b) sont réalisés sous forme de broche d'entraînement et d'écrou de vis à billes de la vis à billes.

11. Agencement d'actionneur (60), présentant :
au moins deux éléments d'actionneur (3a,b) selon l'une quelconque des revendications 5 à 10,
les au moins deux éléments d'actionneur (3a,b) étant disposés avec leurs forces parallèles ; et
les au moins deux éléments d'actionneur (3a,b) exerçant ensemble une influence sur la position d'un élément à action aérodynamique (52).

12. Agencement d'actionneur (60) selon la revendication 11, l'agencement d'actionneur présentant au moins quatre éléments d'actionneur (3a-d) qui exercent ensemble une influence sur la position en trois degrés de liberté d'un élément à action aérodynamique (52).

13. Agencement d'actionneur selon la revendication 11, dans lequel le dispositif de découplage (6), dans le cas d'une défaillance d'une unité d'entraînement (8) d'un élément d'actionneur (3a), peut déclencher le mécanisme de découplage (4) de cet élément d'actionneur (3a) de telle sorte que l'élément d'actionneur (3a) soit désaccouplé fonctionnellement ;
l'influence sur la position de l'élément à action aérodynamique (52) étant en outre exercée par le deuxième élément d'actionneur (3b).

14. Agencement d'actionneur selon la revendication 12, dans lequel le dispositif de découplage (6), dans le cas d'une défaillance d'une unité d'entraînement (8) d'un élément d'actionneur (3a), peut déclencher le mécanisme de découplage (4) de cet élément d'actionneur (3a) de telle sorte que l'élément d'actionneur (3a) soit désaccouplé fonctionnellement ;
l'influence tridimensionnelle sur la position de l'élément à action aérodynamique (52) étant en outre exercée par les au moins trois éléments d'actionneur fonctionnels (3b-d).

15. Aéronef, en particulier avion ou hélicoptère, présentant un élément d'actionneur (3) selon l'une quelconque des revendications 5 à 10 et/ou un agencement d'actionneur selon l'une quelconque des revendications 11 à 14, pour l'entraînement d'un élément à action aérodynamique (52).
